# EUROPÄISCHE PATENTSCHRIFT

(11) **EP 3 557 351 B1**
(45) Veröffentlichungstag und Bekanntmachung des Hinweises auf die Patenterteilung: **09.12.2020**
(21) Anmeldenummer: 18168441.6
(22) Anmeldetag: 20.04.2018
(51) Int. Cl.: G05B 19/418

(54) **SYSTEM UND VERFAHREN ZUR MONTAGE EINER MODULAR AUFGEBAUTEN SCHALTSCHRANKAUSSTATTUNG**
SYSTEM AND METHOD FOR ASSEMBLING A MODULAR CONTROL CABINET FEATURE
SYSTÈME ET PROCÉDÉ DE MONTAGE D'UN ÉQUIPEMENT DE L'ARMOIRE DE DISTRIBUTION INTÉGRÉ MODULAIRE

(43) Veröffentlichungstag der Anmeldung: 23.10.2019
(73) Patentinhaber: Rittal GmbH & Co. KG, 35745 Herborn (DE)
(72) Erfinder: WEICHSEL, Thomas, 41812 Erkelenz (DE); MICHELS, Thomas, 53842 Troisdorf (DE); MARTIN, Lars, 35516 Münzenberg (DE); ZACHRAI, Judith, 35745 Herborn (DE)
(74) Vertreter: Kietzmann, Lutz

(56) Entgegenhaltungen:
- EP-A1- 3 064 325
- DE-A1- 19 512 840
- DE-A1-102015 007 624
- GB-A- 2 445 690
- US-A- 5 225 987
- US-A- 6 003 012
- DELCHAMBRE A ET AL: "KBAP: an industrial prototype of knowledge-based assembly planner", PROCEEDINGS OF THE INTERNATIONAL CONFERENCE ON ROBOTICS AND AUTOMATION NICE, MAY 12 - 14, 19; [PROCEEDINGS OF THE INTERNATIONAL CONFERENCE ON ROBOTICS AND AUTOMATION], LOS ALAMITOS, IEEE COMP. SOC. PRESS, US, Bd. CONF. 8, 12. Mai 1992 (1992-05-12), Seiten 2404-2411, XP010027793, DOI: 10.1109/ROBOT.1992.220104 ISBN: 978-0-8186-2720-0
- BATTINI D ET AL: "Design configuration for a mixed-model assembly system in case of low product demand", THE INTERNATIONAL JOURNAL OF ADVANCED MANUFACTURING TECHNOLOGY, SPRINGER, BERLIN, DE, Bd. 34, Nr. 1-2, 8. Juni 2006 (2006-06-08) , Seiten 188-200, XP019536724, ISSN: 1433-3015
- YAO Y X ET AL: "A pragmatic system to support interactive assembly planning and training in an immersive virtual environment (I-VAPTS)", THE INTERNATIONAL JOURNAL OF ADVANCED MANUFACTURING TECHNOLOGY, SPRINGER, BERLIN, DE, Bd. 30, Nr. 9-10, 9. Dezember 2005 (2005-12-09), Seiten 959-967, XP019440735, ISSN: 1433-3015, DOI: 10.1007/S00170-005-0069-Y
- KINNEY LAWRENCE E ET AL: "High-option manufacturing: The Denver works information-system architecture", AT & T TECHNICAL JOURNAL, AMERICAN TELEPHONE AND TELEGRAPH CO. NEW YORK, US, Bd. 69, Nr. 4, 1. Juli 1990 (1990-07-01), Seiten 110-116, XP011628486, ISSN: 8756-2324, DOI: 10.1002/J.1538-7305.1990.TB00116.X [gefunden am 2014-03-15]

## Beschreibung

Die vorliegende Erfindung betrifft ein System sowie ein mit diesem durchgeführtes Verfahren zur Montage von elektrischen und/oder elektronischen Einbaumodulen für die Fertigstellung einer modular aufgebauten Schaltschrankausstattung in einem Schaltschrankgehäuse, das mit Befestigungsmitteln für mehrere elektrische und/oder elektronische Einbaumodule und weiteren optionalen Komponenten ausgestattet ist. Ferner betrifft die Erfindung auch ein das Verfahren verkörperndes Computerprogrammprodukt sowie ein von diesem erzeugtes spezielles Datenformat zur Montagedurchführung.

Das Einsatzgebiet der vorliegenden Erfindung bezieht sich auf die Schaltschranktechnik. Schaltschränke werden vereinzelt im häuslichen Bereich, vornehmlich jedoch im Rahmen industrieller Anwendungen zur geschützten Unterbringung von elektrischen und/oder elektronischen Komponenten genutzt. Ein solcher Schaltschrank der hier interessierenden Art beherbergt die elektrischen und elektronischen Komponenten, welche gewöhnlich in Form normierter Einbaumodule ausgebildet sind, um vorzugsweise eine automatisierte Fertigungsanlage, eine verfahrenstechnische Anlage, eine Werkzeugmaschine oder dergleichen anzusteuern. Somit handelt es sich bei den im Schaltschrank untergebrachten Einbaumodulen um steuerungstechnische Komponenten, die nicht direkt in der Maschine als Feldgerät angeordnet sind. Als Einbaumodule kommen beispielsweise speicherprogrammierbare Steuerungen, komplette Rechnereinheiten, Frequenzumrichter für Drehzahlsteuerungen, Kommunikationsmodule für Busanbindungen zu unterschiedlichen Bussystemen, digitale Eingangs-/Ausgangs-Module oder auch analoge Eingangsmodule zum Einsatz. Daneben enthält ein Schaltschrank üblicherweise auch elektrische Klemmleisten zum Anschluss der elektrischen Verkabelung am Einsatzort, womit die Verbindung zur Stromversorgung und den anzusteuernden Maschinen und Anlagen hergestellt wird. Die Bestückung des Schaltschranks mit Schaltschrankausstattung erfolgt nach Maßgabe einer anwendungsindividuellen Konstruktion.

Eine solche Konstruktion zur Konzeptionierung und Konstruktion von Schaltschrankausstattungen wird heutzutage softwarebasiert, beispielsweise durch EPLAN Pro Panel® in Form einer im Rahmen der vorliegenden Anmeldung so genannten geplanten Konstruktion erstellt. Eine solche geplante Konstruktion umfasst insbesondere einen dreidimensionalen Montageaufbau in Form eines Layouts, eine virtuelle Verdrahtung der elektrischen und elektronischen Einbaumodule und gegebenenfalls anderer Komponenten sowie eine auf die einzuspeisende und zu verteilende elektrische Leistung abgestimmte Konfiguration von Kupferschienen und dergleichen für flexible Stromverteilersysteme. Die elektrischen oder elektronischen Einbaumodule können beispielsweise mittels Hutschienen im Innenraum des Schaltschranks befestigt werden. Zur Komplettierung des Schaltschranks können auch optionale Komponenten, wie Ventilatoren, Filter, Lüfter, Wärmetauscher, Klimatisierungseinheiten, Innenbeleuchtungssysteme, Kabeleinführungen und dergleichen konzipiert werden. Ferner kann der datentechnische Informationsumfang der geplanten Konstruktion auch Zusatzinformationen hinsichtlich baulicher Randbedingungen, wie beispielsweise eine spezielle Kabelzuführrichtung, notwendige Schraubenanzugsmomente der Befestigung, erforderliche zusätzliche Schutzkappen und dergleichen enthalten.

Im modernen Schaltanlagen- und Steuerungsbau kann die geplante Konstruktion seitens des Kunden entstehen, welcher die Planung softwareunterstützt für seinen Anwendungsfall erstellt. Dieser Konstruktionsschritt kann aber auch seitens des Schaltschrankherstellers nach Kundenvorgaben durchgeführt werden. Als Planungshilfe steht ein Assistentensystem mit angeschlossener Objektbibliothek zur Verfügung, mit welchem eine Schaltschrankkonfiguration unter Beachtung der geometrischen Abmessungen und der geltenden Normen erstellt werden kann. Die hieraus resultierende geplante Konstruktion wird anschließend an den Schaltanlagen- und Steuerungsbauerübermittelt, welcher im Rahmen eines Bearbeitungsservice aus Expertensicht die geplante Konstruktion prüft und anschließend den Schaltschrank zur Fertigstellung in seiner Elektrowerkstatt anweist. In der Elektrowerkstatt des Schaltanlagen- und Steuerungsbauers übernimmt ein oder mehrere Monteure unter Nutzung ihrer Fachkenntnisse und Berufserfahrungen die Schaltschrankmontage. Gewöhnlich verlässt der Schaltschrank die Elektrowerkstatt in Form eines vorkonfektionierten und vorgeprüften Produkts, welches am Einsatzort des Kunden aufgestellt, angeschlossen und in Betrieb genommen wird.

Insbesondere während des Montageprozesses kann es zu Fehlern in der Umsetzung der Konstruktion kommen, welche den Monteuren gewöhnlich als Gesamtlayout in Verbindung mit Stücklisten zur Verfügung steht. Zur Umsetzung der Konstruktion ist ein hinreichendes Fachwissen und Erfahrungen der Monteure erforderlich, um das Fehlerrisiko sowie die Montagezeit zu minimieren.

Die DE 10 2015 007 624 A1 offenbart ein Verfahren zum Montieren von elektrischen und/oder elektronischen Einbaumodulen für die Fertigung einer modular aufgebauten Schaltschrankausstattung in einem Schaltschrankgehäuse, als auch eine entsprechende auf dem Augmented-Reality-Prinzip basierende Montagehilfsvorrichtung sowie ein entsprechendes Computerprogrammprodukt. Der Monteur erhält auf dem Display einer Datenbrille das Bild der Schaltschrankausstattung, wobei ein anzuschließendes Einbaumodul mittels einer Identifizierungseinrichtung identifiziert wird und zumindest ein Anschlusspunkt, an dem das identifizierte Einbaumodul anzuschließen ist, in dem angezeigten Bild auf sem Display eingeblendet wird.

Die US 6,003,012 A offenbart ein Verfahren und computerbasierte Mittel zum Design, Produktion und Verkauf von kundenspezifischen Schaltschränken. Es wurde ein Computerprogramm für die Konfiguration eines Schaltschranks entwickelt und zwischen einer Produktauswahl und einem Materialverwaltungssystem (MRP) eingebunden, um den Prozess der Auftragserfassung, des Entwurfs von Standardschaltschränken, der Bestellung von Teilen und der Planung der Montage zu automatisieren.

Es ist die Aufgabe der vorliegenden Erfindung, ein Verfahren sowie ein System zur Montage einer modular aufgebauten Schaltschrankausstattung dahingehend weiter zu verbessern, dass eine technisch unterstützte fehlerfreie Montage einer anwendungsindividuell konfigurierten Schaltschrankausstattung unter Berücksichtigung einer insbesondere zeiteffizienten Montageschritt-Abfolge realisierbar ist.

Die Aufgabe wird durch ein Verfahren zur Montage einer modular aufgebauten Schaltschrankausstattung gemäß Anspruch 1 gelöst. Hinsichtlich eines dieses Verfahren ausführenden Systems wird auf Anspruch 5 verwiesen. Ein Computerprogrammprodukt ist in Anspruch 10 angegeben. Die jeweils rückbezogenen abhängigen Ansprüche geben vorteilhafte Weiterbildungen der Erfindung wieder.

Die Erfindung schließt die technische Lehre ein, dass zur Montage einer modular aufgebauten Schaltschrankausstattung der gattungsgemäßen Art eine computergestützte Assistenzeinheit durch Analyse der geplanten Konstruktion und Zerlegung in einzelne auf einander aufbauende Montageschritte die fertigungseffiziente Montageschritt-Abfolge ermittelt. Dabei bestimmt die Assistenzeinheit, ob einzelne Montageschritte vorteilhafterweise von einem Monteur oder einer Robotereinrichtung durchzuführen sind. Die Entscheidung beinhaltet zunächst die Ermittlung verschiedener möglicher Montagealternativen, vorzugsweise auf Grundlage der Ressourcen an Monteuren und Robotereinrichtungen, sowie die Selektion der effizientesten Montagealternative hieraus. Als Effizienzkriterium wird vornehmlich eine kalkulatorische Montagezeit für den Gesamtmontageprozess herangezogen, welche minimal sein soll. Zur Umsetzung der per computergestützter Assistenzeinheit ermittelten fertigungseffizienten Montageschritt-Abfolge ist mindestens eine Anzeigeeinheit für Bild- und/oder Textinformationen am Montageort für mindestens einen Monteur installiert, über welche einzelne Montageschritte der ermittelten Montageschritt-Abfolge visualisiert werden. Hierdurch wird eine Unterstützungsmaßnahme für eine möglichst fehlerfreie Umsetzung der Konstruktion bereitgestellt. Weiterhin befindet sich am Montageort eine Eingabeeinheit zur Quittierung eines erledigten Montageschritts durch den Monteur, sodass die Assistenzeinheit die Erledigung protokollieren und den nächsten geplanten Montageschritt aufrufen kann. Die Anzeigeeinheit kann dabei auch kombiniert mit einer Eingabeeinheit ausgeführt sein, beispielsweise als Tablet-Rechner mit eingabesensitivem Display.

Dabei kann erfindungsgemäß ein weiterer Montageschritt im Ergebnis der Analyse durch die computergestützte Assistenzeinheit auch von einer Robotereinrichtung anstelle eines Monteurs durchgeführt werden, falls die Analyse der geplanten Konstruktion durch die Assistenzeinheit ergibt, dass sich zumindest einer der Montageschritte für die Durchführung als automatisierter Montageschritt eignet.

Zur Durchführung dieser erfindungswesentlichen Analysetätigkeit ist in der computergestützten Assistenzeinheit ein Analysealgorithmus implementiert, welcher die geplante Konstruktion, zumindest umfassend ein dreidimensionales Layout der im Schaltschrank angeordneten Einbaumodule mit Anschlusskonfiguration sowie eine Stückliste der geplanten Einbaumodule, in einzelne aufeinander aufbauende Montageschritte zerlegt, indem der Analysealgorithmus durch Zugriff auf eine Wissensdatenbank die zu montierenden Einbaumodule in einer definierten Reihenfolge einem Montageschritt sowie einer zugehörigen Montageanweisung zuordnet. Wird in der geplanten Konstruktion beispielsweise ein Stromversorgungs-Einbaumodul erkannt und sagt die Wissensdatenbank hierzu aus, dass dieses als Erstes eingebaut werden muss, so wird dem Stromversorgungs-Einbaumodul der Montageschritt A zugewiesen. Weiterhin liefert die Wissensdatenbank die Montageanweisung, dass das Stromversorgungs-Einbaumodul durch manuell durch einen Monteur erfolgen soll. Laut Layout ist das Stromversorgungs-Einbaumodul links oben im Schaltschrank zu befestigen.

Ein diesen Informationsumfang enthaltener Datensatz kann zur eindeutigen Beschreibung jedes Montageschritts verwendet werden. Der Datensatz besteht insoweit aus einer Kennung für den Montageschritt, einer Bezeichnung des Montageobjekts, einer Information in Text- oder Bildform, wie das Montageobjekt zu montieren ist (Montageanweisung) und ob eine Robotereinrichtung oder ein Monteur diesen Montageschritt durchführen soll. Bei diesem Datensatz kann auch eine Priorisierung hinterlegt sein, mit welcher angegeben wird, dass vorzugsweise eine Robotereinrichtung den Montageschritt durchführt und hilfsweise ein Monteur, falls die Robotereinrichtung nicht zur Verfügung steht. Somit enthält das Datenformat spezifische Informationen hinsichtlich der Zuordnung
1. wann? (Montageschritt *A, B, C, D*),
2. was? (Montageobjekt *x,y*),
3. wie? (Montageanweisung *Schema*),
4. wer? (Roboter/Monteur *R*/*M*).

Dieses spezielle Datenformat besitzt den Vorteil einer universellen Verwertbarkeit sowohl für einen Monteur, der sich eine Montageanweisung in Form einer Text- oder Bildinformation anzeigen lassen kann als auch hinsichtlich einer Ansteuerung von Robotereinrichtungen, wobei die Montageanweisung in diesem Fall in maschinenlesbarer Form hinterlegt ist. Gleichzeitig beschränkt sich dieses Datenformat auf einen konzentrierten Dateninhalt, welcher sich rechentechnisch zügig verarbeiten und in relationale Datenbankmodelle einbinden lässt.

Wird die Montageanweisung an einen Monteur zur manuellen Durchführung eines Montageschritts ausgegeben, so wird gemäß einer die Erfindung weiter verbessernden Maßnahme vorgeschlagen, dass die computergestützte Assistenzeinheit auf eine Visualisierungsdatenbank zugreift, auf welcher Datensätze einer Montageschritt-Bibliothek gespeichert sind, in der Bild- und/oder Textinformationen für einzelne Montageschritte von Einbaumodulen abrufbar hinterlegt sind. Die Assistenzeinheit greift auf einzelne Datensätze der Visualisierungsdatenbank zu, um je nach Analyseresultat eine an einen Monteur gerichtete passende Montageanweisung auszugeben.

Gemäß einer weiteren die erfindungsgemäße Lösung verbessernden Maßnahme wird vorgeschlagen, dass die computergestützte Assistenzeinheit mit einer Auswertungseinrichtung zur Prüfung von sensorisch erfassten Ist-Einbaupositionen der montierten Einbaumodule und aller Komponenten mit einer Sollvorgabe unter Berücksichtigung von vorgegebenen Einbautoleranzen zusammenwirkt. Insbesondere auch bei der Durchführung einer automatisierten Verdrahtung des Schaltschrankes ist es von Bedeutung, dass die tatsächliche Einbauposition innerhalb enger Einbautoleranzen von der durch die geplante Konstruktion vorgegebenen Soll-Einbauposition abweicht. Denn wird als nachfolgender Montageschritt beispielsweise eine Verdrahtung durchgeführt, so wird durch eine solche Toleranzprüfung die korrekte Durchführung des automatisierten Montageschritts sichergestellt. Das Resultat einer solchen Toleranzprüfung kann generell zwischen benachbarten Arbeitsschritten weitergegeben werden, um das Resultat des vorangegangen Montageschritts toleranzausgleichend berücksichtigen zu können.

Gemäß einer anderen die Erfindung verbessernden Maßnahme wird vorgeschlagen, dass die computergestützte Assistenzeinheit mit einem Fertigungsleitsystem des Fertigungsbetriebes in Verbindung steht, um hierüber Informationen über betrieblich verfügbare Fertigungsressourcen an Monteuren und/oder Robotereinrichtungen zu berücksichtigen. Ausgehend hiervon ist das computergestützte Assistenzsystem in der Lage, eine auf die aktuelle Fertigungsauslastung abgestimmte Montageschritt-Abfolge festzulegen. Ergibt aus dem Fertigungsleitsystem gewonnene Information beispielsweise, dass Verdrahtungs-Robotereinrichtungen störungsbedingt ausgefallen sind oder für den Planungszeitraum bereits vollständig mit anderen Montageaufgaben ausgelastet sind, so kann das computergestützte Assistenzsystem bestimmen, dass stattdessen hilfsweise eine manuelle Durchführung des Montageschritts einer Verdrahtung durch einen Monteur durchgeführt wird. Vor diesem Hintergrund kann das computergestützte Assistenzsystem die Fertigungsplanung berücksichtigend eine Umstellung eines originär als automatisierten Montageschritt geplanten Montageschritt zu einem manuellen Montageschritt vornehmen und im Hinblick hierauf die Montageanweisung nicht in Form von Steuerungsbefehlen für eine Robotereinrichtung, sondern in Form von Bild- und/oder Textinformationen zur Unterstützung des Monteurs ausgeben.

Das erfindungsgemäße Verfahren zur Montage einer gattungsgemäßen modular aufgebauten Schaltschrankausstattung ist vorzugsweise als Computerprogrammprodukt ausgebildet, dessen Programmcodes zur Durchführung des Verfahrens dienen. Dabei kann die Analyse der als Eingangsinformation dienenden geplanten Konstruktion an zentraler Stelle erfolgen, wohingegen die Visualisierung einzelner Montageschritte für den Monteur bzw. die Ansteuerung von Robotereinrichtungen zur automatisierten Durchführung von Montageschritten dezentral am Montageort durchgeführt wird. Wegen der vorgesehenen Quittierung erledigter Montageschritte durch den Monteur bzw. durch die Robotereinrichtung verläuft die Kommunikation zwischen dem Montageort und der diesbezüglich zentralen Assistenzeinheit bidirektional, wobei die einzelnen Verfahrensschritte innerhalb dieses verteilt angeordneten Systems durchgeführt werden.

Weitere die Erfindung verbessernde Maßnahmen werden nachstehend gemeinsam mit der Beschreibung eines Ausführungsbeispiels der Erfindung anhand der Figuren näher dargestellt. Es zeigt:
- Fig. 1:: eine schematische Blockschaltbilddarstellung eines Systems zur Montage einer modular aufgebauten Schaltschrankausstattung,
- Fig. 2:: einen Ablaufplan einzelner Schritte des mit dem System auszuführenden Montageverfahrens,
- Fig. 3a:: einen exemplarischen Datensatz, der von der computergestützten Assistenzeinheit ausgegeben wird, um einen Montageschritt A zu veranlassen, und
- Fig. 3b:: einen exemplarischen Datensatz, der von der computergestützten Assistenzeinheit ausgegeben wird, um einen Montageschritt D zu veranlassen

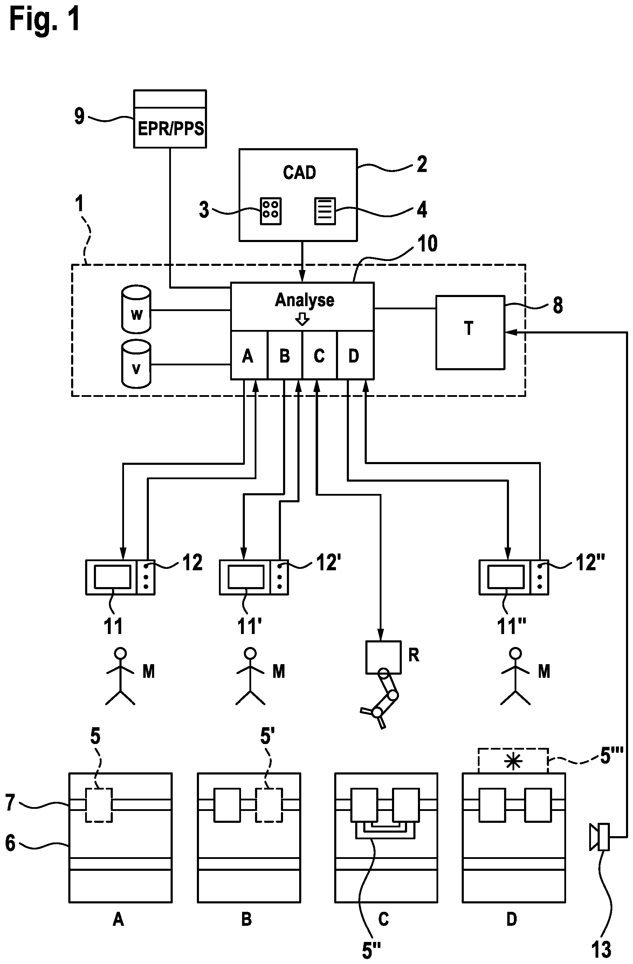

Gemäß **Fig. 1** umfasst ein System zur Montage einer modular aufgebauten Schaltschrankausstattung eine computergestützte Assistenzeinheit 1 zur Ermittlung einer fertigungseffizienten Montageschritt-Abfolge. Dies erfolgt ausgehend von einer der Assistenzeinheit 1 in Dateiform zugeführten geplanten Konstruktion 2. Die geplante Konstruktion 2 beinhaltet Informationen hinsichtlich eines dreidimensionalen Layouts 3 und einer Stückliste 4 aller Einbaumodule 5 bis 5"' und sonstiger Komponenten, welche in einem Schaltschrankgehäuse 6 an Befestigungsmitteln 7, beispielsweise Hutschienen, zu montieren sind.

Zur Ermittlung der fertigungseffizienten Montageschritt-Abfolge zerlegt die computergestützte Assistenzeinheit 1 die geplante Konstruktion 2 in einzelne aufeinander aufbauende Montageschritte, welche entweder von einem Monteur M oder von einer Robotereinrichtung R durchzuführen sind. Hierzu ist in der computergestützten Assistenzeinheit 1 im Rahmen einer Analyse 10 ein Analysealgorithmus implementiert, welcher die laut geplanter Konstruktion 2 zu montierenden Einbaumodule 5 bis 5"' in einer definierten Reihenfolge einem Montageschritt A - D sowie einer je zugehörigen Montageanweisung zuordnet. Die Analyse erfolgt unter Zugriff auf eine angeschlossene Wissensdatenbank W, in welcher Informationen über das notwendige Prozesswissen - beispielsweise Montageinhalte, Montagereihenfolge, Montagefachwissen - hinterlegt sind.

Ferner umfasst die computergestützte Assistenzeinheit 1 eine Visualisierungsdatenbank V, in welcher Datensätze einer Montageschritt-Bibliothek hinterlegt sind. Diese Datensätze enthalten Bild- und/oder Textinformationen für die einzelnen Montageschritte A - D, welche dem Monteur M am Montageort unterstützend zur Verfügung gestellt werden, um einen dort angewiesenen Montageschritt durchzuführen.

Weiterhin ist die computergestützte Assistenzeinheit 1 mit einer Auswertungseinrichtung 8 ausgestattet, welche eine Prüfung von sensorisch über eine Kameraeinheit 13 erfassten Ist-Einbaupositionen der montierten Einbaumodule 5 bis 5'" mit einer Sollvorgabe unter Berücksichtigung von vorgegebenen Einbautoleranzen zusammenwirkt.

Ferner geht der computergestützten Assistenzeinheit 1 zur Ermittlung einer effizienten Montageschritt-Abfolge auch von einem übergeordneten Fertigungsleitsystem 9 in Form eines ERP/PPS stammende Informationen über betrieblich verfügbare Fertigungsressourcen an Monteuren M und/oder Robotereinrichtungen R zu. Vor dem Hintergrund dieser Informationen ermittelt die computergestützte Assistenzeinheit 1 eine auf die aktuelle Fertigungsauslastung des Betriebes abgestimmte Montageschritt-Abfolge A bis D.

Bestimmt die computergestützte Assistenzeinheit 1, dass Montageschritte A, B und D manuell durch einen Monteur M durchzuführen sind, so wird eine entsprechende Arbeitsanweisung in Form einer Bild- und/oder Textinformation auf einer am Montageort installierten Anzeigeeinheit 11 zur Anzeige gebracht. Nachfolgende Anzeigeeinheiten 11' und 11" sind vorgesehen, um andere manuelle Montageschritte C und D der durch die computergestützte Assistenzeinheit 1 ermittelten Montageschritt-Abfolge zu visualisieren. Ferner ist am Montageort für eine manuelle Montage durch einen Monteur auch eine Eingabeeinheit 12 bis 12" installiert, womit der Monteur einen erledigten Montageschritt zumindest zu quittieren hat, sodass die computergestützte Assistenzeinheit 1 in Folge dieser Information beispielsweise die Erledigung des Montageschritts A protokollieren kann, um dann den nächsten geplanten Montageschritt B aufzurufen. Dieser kann an demselben Montageort oder einem benachbarten Montageort der Werkstatt durchgeführt werden.

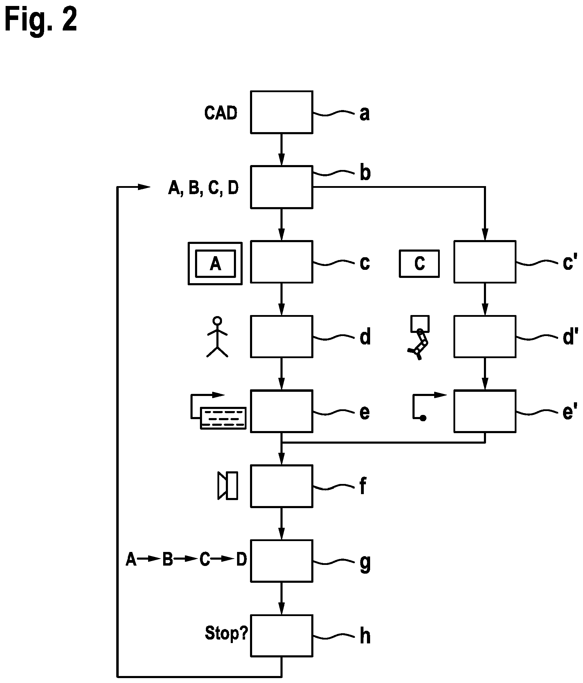

Anhand **Fig. 2** wird nachfolgend der prinzipielle Ablauf eines vom System durchgeführten Montageverfahrens erläutert:
Im Rahmen eines initialen Schritts a) wird eine softwaretechnisch, beispielsweise mit EPLAN Pro Panel®, erstellte geplante Konstruktion an die computergestützte Assistenzeinheit zur Analyse bereitgestellt. Die geplante Konstruktion umfasst zumindest Daten über das dreidimensionale Layout sowie die dazugehörigen Stücklisteninformationen über die Schaltschrankausstattung des zu montierenden Schaltschranks. Die Datei der geplanten Konstruktion beschreibt somit die anwendungsindividuelle Konfiguration des Schaltschranks.

In einem Schritt b) erfolgt eine Aufbereitung der Daten der geplanten Konstruktion durch Nutzung eines Analysealgorithmus, um die geplante Konstruktion in einzelne ineinander aufbauende Montageschritte A, B, C, D zu zerlegen. Der Analysealgorithmus bestimmt im Rahmen der Zerlegung durch Rückgriff auf eine Wissensdatenbank, ob ein Monteur oder eine Robotereinrichtung den jeweiligen Montageschritt durchführen soll und nimmt eine entsprechende Zuordnung vor.

Ergibt die Analyse, dass ein aus der Zerlegung der geplanten Konstruktionresultierender Montageschritt A manuell durchzuführen ist, erfolgt im Schritt c) eine Visualisierung des manuellen Montageschritts A der ermittelten Montageschritt-Abfolge für den Monteur auf einer an dessen Arbeitsplatz installierten Anzeigeeinheit. Die Anzeigeeinheit enthält Bild- und/oder Textinformationen als Montageanweisung, welche von der computergestützten Assistenzeinheit aus einer Visualisierungsdatenbank entnommen worden ist.

Anschließend führt der Monteur im Schritt d) den angezeigten manuellen Montageschritt A durch, bei dem beispielsweise ein Geräteadapter für eine speicherprogrammierbare Steuerung als Einbaumodul an eine Hutschiene des Schaltschranks befestigt wird.

Ist der Montageschritt A durch den Monteur erledigt, so quittiert dieser in einem Schritt e) die fachgerecht ausgeführte Montage über eine am Montageort installierte Eingabeeinheit, welche bei diesem Ausführungsbeispiel als eine Tastatur ausgeführt wird, um neben der binären Quittierungsinformation auch Kommentare über besondere Situationen im Zuge der durchgeführten Montage eingeben zu können, welche an die computergestützte Assistenzeinheit rückgemeldet wird. Hierüber erhält die computergestützte Assistenzeinheit beispielsweise Informationen über Montageschwierigkeiten. Eine solche Montageschwierigkeit kann darin liegen, dass ein oben links in der Gehäuseecke zu platzierendes elektrisches Einbaumodul dort wegen eventuell großer geometrischer Abmessungen schwer an die rückwandseitig des Schaltschrankes befestigte Hutschiene der Montageplatte anzubringen ist. Mit diesen und ähnlichen Informationen lässt sich anschließend die Wissensdatenbank der computergestützten Assistenzeinheit informationstechnisch anreichern, so dass eine Verbesserung der Planung zukünftiger Montageschritte erzielt wird. Wird die besagte Rückinformation über die Montageschwierigkeit als relevant bewertet, so kann zukünftig ausgeschlossen werden, dass baugleiche oder ähnliche Einbaumodule dieser kritischen Einbauposition im Schaltschrank vorgesehen werden. Insoweit hat diese Rückinformation auch eine Auswirkung auf zukünftige CAD-Konstruktionen mit dem eingangs erwähnten softwaregestützten Planungstool.

Ist die Montage erledigt, quittiert und gegebenenfalls kommentiert, so werden in dem folgenden Schritt f) die Einbautoleranzen des montierten Einbaumoduls sensortechnisch geprüft. Dies kann beispielsweise über eine Kameraeinheit eines Bilderfassungssystems erfolgen, welche die Ist-Einbauposition des montierten Einbaumoduls erfasst.

Im folgenden Schritt d) wird nach Soll-Ist-Vergleich die Toleranzinformation durch die computergestützte Assistenzeinheit beim nächst folgenden Montageschritt berücksichtigt, gegebenenfalls weitergegeben. Hierdurch kann ein nachfolgender Montageschritt, insbesondere ein automatisierter Montageschritt, die Information erhalten, ob dieser aufgrund der Ist-Einbaulage überhaupt durch eine Robotereinrichtung durchführbar ist oder zuvor eine Nacharbeitung erfolgen muss.

Diese Beurteilung der Zulässigkeit von Abweichungen innerhalb eines vorgegebenen Toleranzfelds erfolgt im Schritt h) der Montageschritt-Abfolge. Anschließend wird der nächste Montageschritt B aufgerufen.

Wird im Schritt b) einer der Montageschritte A, B, C, D als automatisierter Montageschritt C festgelegt, so wird dieser automatisierte Montageschritt C im Schritt c') von der Assistenzeinheit in Form von maschinenlesbaren Montageanweisungen zur Bestückung der Schaltschrankausstattung an eine Robotereinrichtung ausgegeben. Eine solche Robotereinrichtung kann beispielsweise ein Verdrahtungsroboter für die elektrischen und elektronischen Einbaumodule sein. Mit der erfolgten Montage dieser Einbaumodule ist aufgrund der geplanten Konstruktion, insbesondere des bekannten Layouts, die Lage der elektrischen Anschlusspins bekannt, welche nach einem ebenfalls zur geplanten Konstruktion gehörenden Verdrahtungsschema automatisch schrankintern verdrahtet werden können.

Dies erfolgt im nachfolgenden Schritt d'), bei welchem die Robotereinrichtung den automatisierten Montageschritt C nach Maßgabe der Roboteransteuerung durchführt. Die Steuerbefehle der Roboteransteuerung werden dabei aus den maschinenlesbaren Montageanweisungen der Assistenzeinheit gewonnen.

Nach Erledigung des automatisierten Montageschritts C erfolgt auch hier eine Quittierung desselben im Schritt e'), sodass die computergestützte Assistenzeinheit die Erledigung des automatisierten Montageschritts C protokollieren kann und den nächsten geplanten Montageschritt D aufruft.

Zuvor erfolgt jedoch noch die Einbautoleranzprüfung nach Maßgabe der Schritte f) bis h).

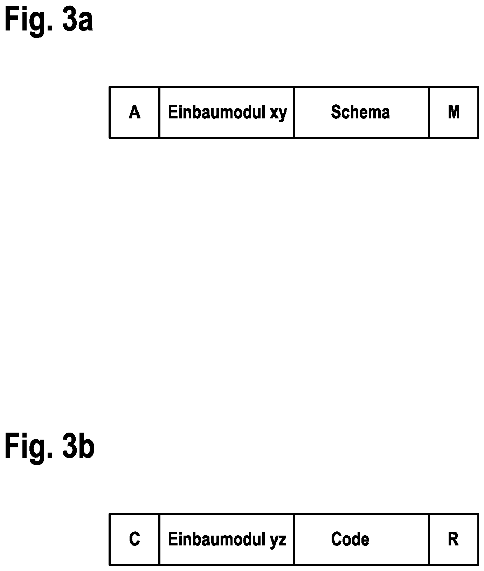

In **Fig. 3a** ist ein exemplarischer Ausgabedatensatz des Computerprogrammprodukts illustriert, welcher im Ergebnis der von der computergestützten Assistenzeinheit durchgeführten Analyse die Zerlegung der geplanten Konstruktion in einzelne Montageschritte A, B, C, D vornimmt. Um die Montageschritt-Abfolge zu beschreiben umfasst das Datenformat des Ausgabedatensatzes zumindest eine Schlüsselkennung für den exemplarischen Montageschritt "A", welcher eine Bezeichnung des Montageobjekts zugeordnet ist "Einbaumodul xy" sowie - im Falle eines manuell auszuführenden Montageschritts - die hierfür zu verwendende Montageanweisung in Form einer Bild- und/oder Textinformation "Schema" sowie eine Kennung dafür, dass dieser Montageschritt einer manuellen Montage "M" an einem bestimmten Montageort zugeordnet ist.

Gemäß **Fig. 3b** besteht der Ausgabedatensatz für einen automatisiert mittels Robotereinrichtung durchzuführenden Montageschritt aus der Schlüsselkennung des Montageschritts "C", der Bezeichnung des Montageobjekts "Einbaumodul yz", die zugehörige Montageanweisung in Form einer maschinenlesbaren Information "Code" sowie eine Kennung für die Zuordnung zur automatisierten Montage R durch eine bestimmte Robotereinrichtung.

Die Erfindung ist nicht beschränkt auf das vorstehend beschriebene bevorzugte Ausführungsbeispiel. So können beispielsweise auch andere Abfolgen von manuellen und automatisierten Montageschritten durchgeführt werden.

## Patentansprüche

1. Verfahren zur Montage einer modular aufgebauten Schaltschrankausstattung in einem Schaltschrankgehäuse (6), das mit Befestigungsmitteln für mehrere elektrische und/ oder elektronische Einbaumodule (5 - 5"') und weiteren optionalen Komponenten ausgestattet ist, umfassend die folgenden Schritte:
a) Bereitstellung einer geplanten Konstruktion (2) für eine anwendungsindividuelle Konfiguration der Schaltschrankausstattung an eine computergestützte Assistenzeinheit (1),
b) Aufbereitung zur Montage durch Analyse der geplanten Konstruktion (2) und Zerlegung in einzelne aufeinander aufbauende von einem Monteur (M) oder einer Robotereinrichtung (R) durchzuführende Montageschritte (A, B, C, D) durch die computergestützte Assistenzeinheit (1) für die Ermittlung einer effizienten Montageschritt-Abfolge, wobei in dem Fall, dass für die Durchführung eines Montageschritts (A; B; D) der Montageschritt-Abfolge ein Monteur (M) bestimmt ist, folgende Schritte durchgeführt werden:
c) Visualisierung des manuellen Montageschritts (A) der ermittelten Montageschritt-Abfolge durch einen am Montageort für einen Monteur (M) installierte Anzeigeeinheit (11 - 11") für Bild- und/oder Textinformationen als Montageanweisung,
d) Durchführung des manuellen Montageschritts (A) nach Maßgabe der angezeigten Bild- und/oder Textinformation durch den Monteur (M),
e) Quittierung des erledigten Montageschritts (A) über eine für den Monteur (M) am Montageort installierte Eingabeeinheit (12 - 12") zur Protokollierung der Erledigung und zum Abruf des nächsten geplanten Montageschritts (B) durch die computergestützte Assistenzeinheit (11 - 11"),
wobei neben den einzelnen vom Monteur (M) manuell durchzuführenden Schritten c) bis e) gemäß dem im Schritt b) genannten Fall in Ergebnis der Analyse durch die computergestützte Assistenzeinheit (1) in einem anderen Fall mindestens ein robotergestützt durchzuführender automatisierter Montageschritt (C) festgelegt wird, der
c') von der Assistenzeinheit (1) in Form von maschinenlesbaren Montageanweisungen zur Bestückung der Schaltschrankausstattung an eine Robotereinrichtung (R) ausgegeben wird, wonach
d') die Robotereinrichtung (R) den automatisierten Montageschritt (C) nach Maßgabe der Roboteransteuerung durchführt, und
e') nach Erledigung des automatisierten Montageschritts (C) eine Quittierung desselben zur Protokollierung der Erledigung und zum Abruf des nächsten geplanten Montageschritts (D) durch die Assistenzeinheit (1) durchführt.

2. Verfahren nach Anspruch 1, **dadurch gekennzeichnet,**
**dass** durch die Assistenzeinheit (1) die effiziente Montageschritt-Abfolge anhand eines Abgleichs verfügbarer Fertigungsressourcen an Monteuren (M) und/oder Robotereinrichtung (R) zur Durchführung der Montageschritte (A, B, C, D) ermittelt wird, um einen geplant automatisierten Montageschritt (C) in einen manuellen Montageschritt (C) umzuwandeln, falls die zur automatisierten Durchführung erforderliche Robotereinrichtung () nicht zur Verfügung steht.

3. Verfahren nach Anspruch 1, **dadurch gekennzeichnet,**
**dass** durch die Assistenzeinheit (1) die Auswahl zwischen unterschiedlichen Varianten an Montageschritt-Abfolgen anhand einer kürzest möglichen Montagezeit und/oder der benötigten Montageressourcen (Monteur/Roboter) für die Montage der Schaltschrankausstattung getroffen wird.

4. Verfahren nach Anspruch 1, **dadurch gekennzeichnet, dass** nach Quittierung e) oder e') der Erledigung eines manuellen beziehungsweise automatisierten Montageschritts:
f) die Einbautoleranzen des montierten Einbaumoduls (5 - 5"') sensortechnisch geprüft werden, welche
g) als Toleranzinformation durch die Assistenzeinheit (1) an den nächstfolgenden Montageschritt weitergeben werden, sodass
h) eine Beurteilung der Zulässigkeit von Abweichungen innerhalb eines vorgegebenen Toleranzfeldes durchgeführt wird, ehe der nächste Montageschritt freigegeben wird.

5. System zur Montage von elektrischen und/oder elektronischen Einbaumodulen (5 - 5"') für die Fertigstellung einer modular aufgebauten Schaltschrankausstattung in einem Schaltschrankgehäuse (6), das mit Befestigungsmitteln für die mehreren elektrischen und/oder elektronischen Einbaumodule (5 - 5"') und weiteren optionalen technischen Komponenten ausgestattet ist, mit einem Verfahren nach einem der Ansprüche 1 bis 4, umfassend:
- eine computergestützte Assistenzeinheit (1) zur Ermittlung einer fertigungseffizienten Montageschritt-Abfolge durch Analyse einer geplanten Konstruktion (2) und Zerlegung in einzelne aufeinander aufbauende Montageschritte (A, B, C, D), die von einem Monteur (M) oder einer Robotereinrichtung (R) durchzuführen sind,
- mindestens eine Anzeigeeinheit (11 - 11') für Bild- und/oder Textinformationen, die am Montageort für mindestens einen Monteur (M) installiert ist, um manuelle Montageschritte (A; B; D) der ermittelten Montageschritt-Abfolge zu visualisieren,
- mindestens einer Eingabeeinheit (12 - 12') zur zumindest Quittierung des erledigten Montageschritts (A; B; D) durch den Monteur (M), sodass die Assistenzeinheit (1) die Erledigung protokolliert und den nächstfolgend geplanten Montageschritt aufruft.

6. System nach Anspruch 5, **dadurch gekennzeichnet,**
**dass** in der computergestützten Assistenzeinheit (1) ein Analysealgorithmus (10) implementiert ist, welcher die geplante Konstruktion (2), zumindest umfassend ein digitalisiertes dreidimensionales Layout (3) und Stücklisteninformationen (4) der geplanten Einbaumodule (5 - 5'"), in einzelne aufeinander aufbauende Montageschritte (A, B, C, D) zerlegt, indem der Analysealgorithmus (10) durch Zugriff auf zumindest eine Wissensdatenbank (W) die zu montierenden Einbaumodule (5 - 5'") in einer definierten Reihenfolge einem Montageschritt (A; B; C; D) sowie einer zugehörigen Montageanweisung zuordnet.

7. System nach Anspruch 5 oder 6, **dadurch gekennzeichnet,**
**dass** die computergestützte Assistenzeinheit (1) auf eine Visualisierungs-Datenbank (V) zugreift, auf welcher Datenobjekte einer Montageschritt-Bibliothek hinterlegt sind, in der Bild- und/oder Textinformationen für einzelne Montageschritte (A, B, C, D) gespeichert sind.

8. System nach einem der vorstehenden Ansprüche 5 bis 7, **dadurch gekennzeichnet, dass** die computergestützte Assistenzeinheit (1) zur Schrittfolgesteuerung mit einer Toleranzauswertungseinrichtung (T) zur Prüfung von sensorisch erfassten Ist-Einbaupositionen der montierten Einbaumodule (5 - 5"') mit einer Sollvorgabe unter Berücksichtigung von vorgegebenen Einbautoleranzen zusammenwirkt.

9. System nach einem der vorstehenden Ansprüche 5 bis 8, **dadurch gekennzeichnet, dass** die computergestützte Assistenzeinheit (1) aus einem Fertigungsleitsystem (9) Informationen über betrieblich verfügbare Fertigungsressourcen an Monteuren (M) und/oder Robotereinrichtungen (R) zur Ermittlung einer auf die aktuelle Fertigungsauslastung abgestimmte Montageschritt-Abfolge (A, B, C, D) verarbeitet.

10. Computerprogrammprodukt mit Programmcodemitteln zur Durchführung des Fertigstellungsverfahrens nach einem der Ansprüche 1 bis 4, wenn das Computerprogrammprodukt auf der computergestützten Assistenzeinheit (1) eines Systems nach einem der Ansprüche 5 bis 9 abläuft oder auf einem computerlesbaren Datenträger oder in einem Cloud-Speicher abgespeichert ist.

## Claims

1. Method for mounting a modular switch cabinet equipment in a switch cabinet housing (6), which is equipped with fastening means for several electrical and/or electronic installation modules (5 - 5"') and further optional components, comprising the following steps:
a) Provision of a planned design (2) for an application-specific configuration of the switch cabinet equipment to a computer-aided assistance unit (1),
b) Preparation for assembly by analysis of the planned construction (2) and disassembly into individual assembly steps (A, B, C, D) which build on one another and are to be carried out by a fitter (M) or a robot device (R) by the computer-aided assistance unit (1) for determining an efficient assembly step sequence, wherein in the case where a fitter (M) is designated to carry out an assembly step (A; B; D) of the assembly step sequence, the following steps are carried out:
c) Visualization of the manual assembly step (A) of the determined assembly step sequence by a display unit (11 - 11") installed at the assembly site for a fitter (M) for image and/or text information as assembly instructions,
d) Execution of the manual assembly step (A) by the fitter (M) in accordance with the displayed image and/or text information,
e) Acknowledgement of the completed assembly step (A) via an input unit (12 - 12") installed for the fitter (M) at the assembly site for logging the completion and for calling up the next planned assembly step (B) by the computer-aided assistance unit (11 - 11"), wherein,
in addition to the individual steps c) to e) to be carried out manually by the fitter (M) according to the case mentioned in step b) as a result of the analysis by the computer-aided assistance unit (1), at least one automated assembly step (C) to be carried out with the aid of a robot is defined, which automated assembly step:
c') is issued by the assistance unit (1) in the form of machine-readable assembly instructions for the assembly of the switch cabinet equipment to a robot device (R), after which
d') the robot device (R) carries out the automated assembly step (C) in accordance with the robot control, and
e') after completion of the automated assembly step (C), the assistant unit (1) acknowledges the automated assembly step (C) to log its completion and to call up the next planned assembly step (D).

2. Method according to claim 1, **characterized in**
**that** the assistance unit (1) determines the efficient assembly step sequence on the basis of an alignment of available production resources of assemblers (M) and/or robot device (R) for carrying out the assembly steps (A, B, C, D) in order to convert a planned automated assembly step (C) into a manual assembly step (C) if the robot device (R) required for the automated execution is not available.

3. Method according to claim 1, **characterized in**
**that** the assistance unit (1) makes a selection between different variants of assembly step sequences on the basis of the shortest possible assembly time and/or the required assembly resources (assembler/robot) assembly of the switch cabinet equipment.

4. Method according to claim 1, **characterized in**
**that** after acknowledgement e) or e') of the completion of a manual or automated assembly step:
f) the installation tolerances of the mounted installation module (5 - 5"') are checked by sensors, which
g) are passed on as tolerance information by the assistant unit (1) to the next assembly step, so that
h) an evaluation of the permissibility of deviations within a specified tolerance field is carried out before the next assembly step is released.

5. System for mounting electrical and/or electronic built-in modules (5 - 5"') for the completion of a modular switch cabinet equipment in a switch cabinet housing (6) equipped with fastening means for the several electrical and/or electronic built-in modules (5 - 5"') and further optional technical components, with a method according to one of the claims 1 to 4, comprising:
- a computer-aided assistance unit (1) for determining a production-efficient assembly step sequence by analysis of a planned design (2) and disassembly into individual assembly steps (A, B, C, D) which build on one another and are to be carried out by an assembler (M) or a robot device (R),
- at least one display unit (11 - 11') for image and/or text information, which is installed at the installation site for at least one fitter (M) to visualize manual installation steps (A; B; D) of the determined installation step sequence,
- at least one input unit (12 - 12') for at least acknowledgement of the completed assembly step (A; B; D) by the fitter (M) so that the assistant unit (1) records the completion and calls up the next scheduled assembly step.

6. System according to claim 5, **characterized in**
**that** an analysis algorithm (10) is implemented in the computer-aided assistance unit (1), which analyses the planned construction (2), at least comprising a digitized three-dimensional layout (3) and parts list information (4) of the planned installation modules (5 - 5'"), into individual assembly steps (A, B, C, D) which build on one another, in that the analysis algorithm (10), by accessing at least one knowledge database (W), assembles the installation modules (5 - 5'") to be assembled in a defined sequence to an assembly step (A; B; C; D) and an associated assembly instruction in a defined order.

7. System according to claim 5 or 6, **characterized in**
**that** the computer-aided assistance unit (1) accesses a visualization database (V), on which data objects of an assembly step library are stored, in which image and/or text information for individual assembly steps (A, B, C, D) is stored.

8. System according to one of the above claims 5 to 7, **characterized in**
**that** the computer-aided assistance unit (1) for step sequence control interacts with a tolerance evaluation device (T) for checking actual installation positions of the mounted installation modules (5 - 5"') detected by sensors with a nominal specification taking into account specified installation tolerances.

9. System according to one of the above claims 5 to 8, **characterised in**
**that** the computer-aided assistance unit (1) processes information from a production control system (9) about operationally available production resources of fitters (M) and/or robot devices (R) to determine an assembly step sequence (A, B, C, D) matched to the current production capacity utilisation.

10. Computer program product with program code means for carrying out the completion procedure according to one of claims 1 to 4, if the computer program product runs on the computer-aided assistance unit (1) of a system according to one of claims 5 to 9 or is stored on a computer-readable data carrier or in a cloud storage .

## Revendications

1. Procédé d'assemblage d'une structure modulaire d'un équipement d'armoire électrique dans un boîtier d'armoire électrique (6), qui est équipé avec des moyens de fixation pour plusieurs modules d'installation électriques et / ou électroniques (5 - 5"') et d'autres composants optionnels, comprenant les étapes suivantes :
a) Mise à disposition d'une construction planifiée (2) pour une configuration individuelle de l'application de l'équipement d'armoire électrique à une unité d'assistance assistée par ordinateur (1),
b) Préparation de l'assemblage par l'analyse de la construction planifiée (2) et découpage en étapes successives d'assemblage individuelles (A, B, C, D) par un installateur (M) ou un dispositif robotisé (R) par l'unité d'assistance assistée par ordinateur (1) pour la détermination succession efficace d'étapes de montage ; dans lequel, dans le cas, où pour la mise en œuvre d'une étape d'assemblage (A; B; D) de la succession d'étapes d'assemblage un installateur (M) est choisi, les étapes suivantes sont mises en œuvre :
c) Visualisation des étapes d'assemblage manuelles (A) de la succession d'étapes d'assemblage déterminée au moyen d'une unité (11 - 11") d'affichage d'informations sous forme d'image ou de texte installée sur le lieu d'assemblage pour un installateur (M) à titre d'instructions d'assemblage,
d) Mise en œuvre par l'installateur (M) des étapes d'assemblages manuelles (A) selon les conditions des informations affichées sous forme d'image ou de texte,
e) confirmation des étapes d'assemblage (A) achevées sur une unité d'entrée (12 - 12") installées pour un installateur (M) sur le lieu d'assemblage pour l'enregistrement de ces étapes achevées et pour le déclenchement des prochaines étapes d'assemblage planifiées (B) par l'unité d'assistance assistée par ordinateur (11 - 11"),
dans lequel, à côté des étapes individuelles c) à e) à mettre en œuvre manuellement par l'installateur (M) selon le cas cité à l'étape b) en résultat de l'analyse par l'unité d'assistance assistée par ordinateur (1) dans un autre cas au moins une étape d'assemblage automatisée (C) assistée par robot à mettre en œuvre est définie, qui
c') est fourni par l'unité d'assistance (1) sous la forme d'instructions d'assemblage lisibles par machine pour l'assemblage de l'équipement d'armoire électrique à un dispositif robotisé (R),
d') le dispositif robotisé (R) de l'étape d'assemblage automatisée (C) est mis en œuvre selon les conditions de la commande robotisée, et
e') après l'achèvement de l'étape d'assemblage automatisée (C) une réception de cette information pour son enregistrement et pour le déclenchement des prochaines étapes d'assemblage planifiés (D) par l'unité d'assistance (1) est réalisée.

2. Procédé selon la revendication 1, **caractérisé en ce que**,
la succession d'étapes d'assemblage efficace est déterminée par l'unité d'assistance (1) au moyen d'une comparaison des ressources de production disponibles pour l'installateur (M) et/ou le dispositif robotisé (R) pour la mise en œuvre des étapes d'assemblage (A, B, C, D), pour convertir une étape d'assemblage automatisée planifiée (C) en une étape d'assemblage manuelle (C), au cas où le dispositif robotisé () nécessaire pour la mise en œuvre automatisée ne serait pas disponible.

3. Procédé selon la revendication 1, **caractérisé en ce que**,
le choix entre différentes variantes en succession d'étapes d'assemblage sera obtenu par l'unité d'assistance (1) au moyen du temps d'assemblage le plus court possible et/ou des nécessaires ressources d'assemblage (installateur/robot) pour l'assemblage de l'équipement d'armoire électrique.

4. Procédé selon la revendication 1, **caractérisé en ce que**, après la réception e) ou e') de l'information d'achèvement d'une étape d'assemblage manuelle ou automatisée :
f) la tolérance d'installation du module d'installation assemblé (5 - 5"') est contrôlée par capteurs, laquelle
g) est transmise par l'unité d'assistance (1) à la prochaine étape d'assemblage comme information de tolérance, de sorte que
h) une évaluation de la recevabilité des écarts à l'intérieur d'un espace de tolérance prédéterminé est mise en œuvre, avant que la prochaine étape d'assemblage soit autorisée.

5. Système d'assemblage de module d'installation électrique ou électronique (5 - 5"') pour la finalisation d'une structure modulaire d'équipement d'armoire électrique dans un boîtier d'armoire électrique (6), qui avec des moyens de fixation pour les plusieurs modules d'installation électrique et/ou électronique (5
- 5"') et est équipé d'autres composants techniques optionnels, avec un procédé selon l'une des revendications 1 à 4, comprenant :
- une unité d'assistance assistée par ordinateur (1) pour la détermination d'une succession d'étapes d'assemblage efficace en matière de production par l'analyse d'une construction planifiée (2) et le découpage en étapes d'assemblage individuelles (A, B, C, D) successives, qui sont à mettre en œuvre par un installateur (M) ou un dispositif robotisé (R),
- au moins une unité d'affichage (11 - 11') d'informations sous forme d'image ou de texte, qui est installé sur le lieu d'assemblage pour au moins un installateur (M), pour visualiser les étapes d'assemblage (A; B; D) manuelles de la succession d'étapes d'assemblage déterminée,
- au moins une unité d'entrée (12 - 12') d'au moins la réception des étape d'assemblages (A; B; D) achevées par l'installateur (M), de sorte que l'unité d'assistance (1) enregistre l'achèvement et appelle la prochaine étape d'assemblage planifiée.

6. Système selon la revendication 5, **caractérisé en ce que**,
dans l'unité d'assistance assistée par ordinateur (1) un algorithme d'analyse (10) est implémenté, dont la construction planifiée (2), comprend au moins un agencement tridimensionnel digitalisé (3) et une nomenclature (4) d'informations du module d'installation planifié (5 - 5'"), qui découpe en étapes d'assemblage individuelles (A, B, C, D) successives, dans lequel l'algorithme d'analyse (10) attribue, par l'accès à au moins une base de connaissance (W) du module d'installation à assembler (5 - 5'") dans un ordre défini, une étape d'assemblage (A; B; C; D) et une instruction d'assemblage correspondante.

7. Système selon la revendication 5 ou 6, **caractérisé en ce que**,
l'unité d'assistance assistée par ordinateur (1) accède à une base de données de visualisation (V), dans laquelle des objets de données d'une bibliothèque d'étape d'assemblage sont déposés, dans laquelle des informations sous forme d'image ou de texte pour des étapes d'assemblage individuelles (A, B, C, D) sont enregistrées.

8. Système selon l'une des revendications précédentes 5 à 7, **caractérisé en ce que**, l'unité d'assistance assistée par ordinateur (1) de la commande de suivi d'étape interagit avec le dispositif d'évaluation de tolérance (T) pour contrôler par des capteurs la position d'installation réelle des modules d'installation (5 - 5"') assemblés avec une cible dans le respect d'une tolérance d'installation prédéterminée.

9. Système selon l'une des revendications précédentes 5 à 8, **caractérisé en ce que**, l'unité d'assistance assistée par ordinateur (1) traite des informations sur les ressources de production opérationnelles disponibles pour l'installateur (M) et/ou le dispositif robotisé (R) à partir d'un système de guidage de production (9) pour la détermination d'une parmi la succession d'étape d'assemblage (A, B, C, D) d'utilisation de production actuelles coordonnées.

10. Produit de programmation d'un ordinateur avec des moyens de codage de programme pour la mise en œuvre de procédés de finalisation selon l'une des revendications 1 à 4, si le produit de programmation d'un ordinateur fonctionne sur une unité d'assistance assistée par ordinateur (1) d'un système selon l'une des revendications 5 à 9 ou sur un support de données lisible sur un ordinateur ou sauvegardé dans un espace de sauvegarde dans le Cloud.
